# EUROPEAN PATENT SPECIFICATION

(11) **EP 2 568 393 B1**
(45) Date of publication and mention of the grant of the patent: **23.06.2021**
(21) Application number: 10851056.1
(22) Date of filing: 07.05.2010
(51) Int. Cl.: G06F 15/02, G09G 3/04

(54) **ELECTRONIC CALCULATOR**
ELEKTRONISCHER RECHNER
CALCULATRICE ÉLECTRONIQUE

(43) Date of publication of application: 13.03.2013
(73) Proprietor: Casio Computer Co., Ltd., Tokyo 151-8543 (JP)
(72) Inventor: KIMURA, Satoshi, Hamura-shi, Tokyo 205-8555 (JP); KOYAMA, Hisashi, Hamura-shi, Tokyo 205-8555 (JP); FURUKAWA, Ryoichi, Hamura-shi, Tokyo 205-8555 (JP); MURAI, Yuji, Hamura-shi, Tokyo 205-8555 (JP); LAU, Wanchun, Hamura-shi, Tokyo 205-8555 (JP)
(74) Representative: Grünecker Patent- und Rechtsanwälte PartG mbB
(86) International application number: PCT/JP2010/057831
(87) International publication number: WO 2011/138836

(56) References cited:
- JP-A- S5 451 751
- JP-A- 10 222 213
- JP-A- 58 190 985
- JP-A- 2000 311 174
- JP-A- 2004 226 634
- JP-A- 2004 226 634
- JP-A- 2006 003 975
- JP-U- H03 127 948
- None

## Description

This invention relates to an electronic calculator which displays digit grouping.

With a conventional electronic calculator, digits in a number displayed on a display module are basically arranged in groups of three so as to correspond to 1,000's (thousands), 1,000,000's (millions), 1,000,000,000's (billions), and so on.

An electronic calculator that displays a number by grouping the number in units of three digits has been considered (refer to, for example, patent document 1).

JP 2004/226634 A relates to a display apparatus displaying numbers together with decimal delimiter and grouping symbols, wherein the setting of decimal delimiter and of the position of the digit-grouping symbol are treated individually.

From JP S54 51751 A an apparatus is known which reverses a displayed number upon tilting of the apparatus.

### PRIOR ART DOCUMENT

### PATENT DOCUMENT

Patent document 1: Jpn. Pat. Appln. KOKAI 20 Publication No. 04-123125

Although it is common practice in the West to represent a number in units of three digits, digit grouping positions differ from country to country or from region to region.

For example, in India, digit grouping is performed in units of two digits (except for only the last three digits) so as to correspond to 1,000's (Sahastr/Hazaar), 1,00,000's (Lakn), 1,00,00,000's (Crore), 1,00,00,00,000's (Arawb), and so on.

Therefore, for example, in India, it is very difficult to use a conventional electronic calculator that displays the number by separating the number in units of three digits.

Generally, in English-speaking countries, the digit grouping symbol is represented by a comma "," and a decimal point symbol is represented by a period ".". However, in non-English-speaking countries, sometimes a decimal point symbol is represented by a comma "," and a digit grouping symbol is represented by a period ".".

It is, accordingly, an object of the invention to provide an electronic calculator which enables the user to switch a digit grouping symbol placement pattern displayed together with a number on a display module according to a country or a region as needed.

This is achieved by the features of the independent claim.

An electronic calculator according to claim 1 comprises a display module in which digit grouping display members and decimal point display members are arranged in the upper part and lower part of a plural-digit number display member. The electronic calculator causes display pattern storage means to store a display pattern of digit grouping symbols displayed together with a number on the display module, further causes display pattern selection means to select two types of display patterns according to user operation from the stored digit grouping symbol display patterns, and still further causes selected display pattern storage means to store the selected two types of display patterns. Then, the electronic calculator causes display pattern switching means to switch the stored two types of display patterns according to user operaLion.

### ADVANTAGE OF THE INVENTION

According to the present invention, there is provided an electronic calculator which enables the user to switch a digit grouping symbol placement pattern displayed together with a number on a display module according to a country or a region as needed.

### BRIEF DESCRIPTION OF THE DRAWING

FIG. 1 is a front view showing an outer configuration of an electronic calculator 10 with a check function according to an embodiment of an electronic calculator of the invention;
FIG. 2 is a front view showing the configuration of a segment display module 15 of the electronic calculator 10;
FIG. 3 is a block diagram showing a configuration of the electronic circuitry of the electronic calculator 10;
FIG. 4A shows a first display pattern selectable in a display pattern setting mode of the electronic calculator 10;
FIG. 4B shows a second display pattern selectable in the display pattern setting mode of the electronic calculator 10;
FIG. 4C shows a third display pattern selectable in the display pattern setting mode of the electronic calculator 10;
FIG. 4D shows a fourth display pattern selectable in the display pattern setting mode of the electronic calculator 10;
FIG. 4E shows a fifth display pattern selectable in the display pattern setting mode of the electronic calculator 10;
FIG. 4F shows a sixth display pattern selectable in the display pattern setting mode of the electronic calculator 10;
FIG. 5 is a flowchart to explain entire processing performed by the electronic calculator 10;
FIG. 6A shows a concrete example of a number display operation in a third display pattern associated with arithmetic processing performed by the electronic calculator 10;
FIG. 6B shows a concrete example of a number display operation in a second display pattern associated with arithmetic processing performed by the electronic calculator 10;
FIG. 7 is a flowchart to explain an inclination detection process performed by the electronic calculator 10;
FIG. 8A shows a concrete example of a number display operation in a body upright state associated with the inclination detection process performed by the electronic calculator 10; and
FIG. 8B shows a concrete example of a number display operation in a body upside-down state associated with the inclination detection process performed by the electronic calculator 10.

### BEST MODE OF CARRYING OUT THE INVENTION

Hereinafter, referring to the accompanying drawings, an embodiment of the invention will be explained.

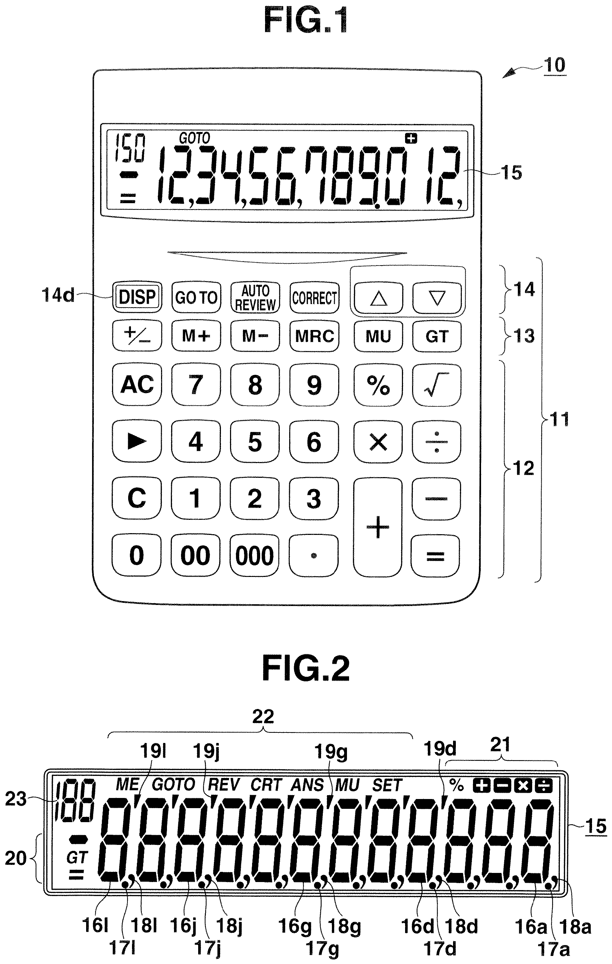

FIG. 1 is a front view showing an outer configuration of an electronic calculator 10 with a check function according to an embodiment of an electronic calculator of the invention.

On the front face of the electronic calculator 10, there are provided a key input module 11 and a segment display module 15.

The key input module 11 includes a number and operation symbol key group 12 for inputting numbers or instructing to do calculations, a calculation function setting key group 13 for switching symbols or setting a calculation mode using a memory function, a check function key group 14 for reviewing a calculation process using a calculation check function, and a [DISP] key 14d for switching digit grouping display patterns or instructing to set a digit grouping display pattern.

As the number and operation symbol key group 12, [0] to [9] (number) keys, [+], [-], [×], [÷] and [=] (arithmetic symbol) keys, an [AC] (clear) key, and the like are arranged.

As the calculation function setting key group 13, a [+/-] key, [M+] (memory add) key, [M-] (memory subtract) key, [MRC] (memory clear) key, [MU] (mark up) key, [GT] (grand total) key, and the like are arranged.

As the check function key group 14, a [GO TO] (calculation step specify) key, [AUTO REVIEW] (automatic review) key, [CORRECT] (correct) key, [Δ] and [∇] (calculation step move) keys, and the like are arranged.

FIG. 2 is a front view showing the configuration of the segment display module 15 of the electronic calculator 10.

The display module 15 includes 12-digit number display members 16a to 161, period display members 17a to 171 and comma display members 18a to 181 placed at the bottom right of the number display members 16a to 161 respectively, and prime display members 19d to 191 placed at the top right of the number display members 16d to 161 from the fourth to twelfth digits respectively.

The period display members 17a to 171 are mostly used as decimal points. Any one of the period display members 17a to 171 is displayed according to the number of digits necessary after the decimal point of a displayed number.

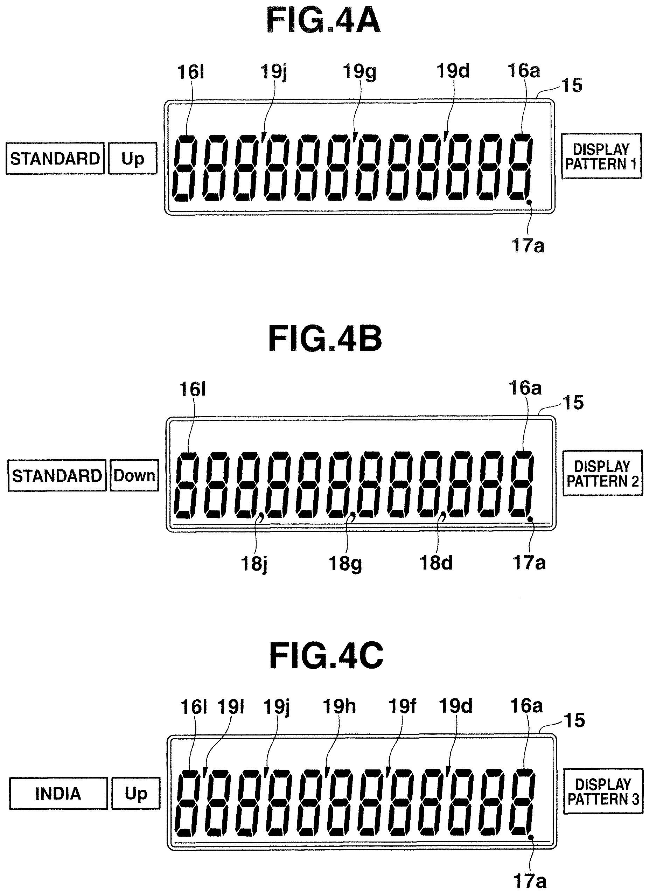

The comma display members 18a to 181 are mostly used for the digit grouping (or a positional representation) of a displayed number. They are displayed at digit positions corresponding to preset six display patterns (FIGS. 4A to 4F) to be selected according to a country or a region.

The prime display members 19d to 191 are mostly used for the digit grouping (or a positional representation) of a number in place of the comma display members 18a to 181.

In non-English-speaking countries or regions, the period display members 17a to 171 are sometimes used for the digit grouping (or a positional representation) of a number and the comma display members 18a to 181 are sometimes used as decimal points.

In addition, the display module 15 includes prefix display members ("-", "GT", "=") 20 to the left of the number display members 16a to 161, operator display members ("%", "+", "-", "×", "÷") 21 at the top right, mode display members ("M", "E", "GOTO", "REV", "CRT", "ANS", "MU", "SET") 22 in the upper part, and a step count display member 23 at the top left.

Of the prefix display members 20, "-" is displayed when a displayed number is negative, "GT" is displayed when a grand total is displayed according to the pressing of the [GT] (grand total) key, and "-" is displayed when a calculation result is displayed according to the pressing of the [=] (equals) key.

Each of the operator display members ("%", "+", "-", "×", "÷") 21 is displayed when the corresponding key in the number and operation symbol key group 12 is pressed.

Of the mode display members ("M", "E", "GOTO", "REV", "CRT", "ANS", "MU", "SET") 22, "M" is displayed when a memory mode is on, "E" when an error has occurred, "GOTO" when a calculation step specify mode is activated by the [GO TO] key, "REV" when an automatic review mode is activated by the [AUTO REVIEW] key, "CRT" when a correct mode is activated by the [CORRECT] key, "ANS" when a calculation result display mode is activated by the [=] key, "MU" when a markup mode is activated by the [MU] key, and "SET" when a display pattern setting mode is activated by pressing the [DISP] key 14d for an extended time.

The step count display member 23 includes, for example, a three-digit number display member. Segments corresponding to the calculation step count of a number displayed by the number display members 16a to 161 are displayed.

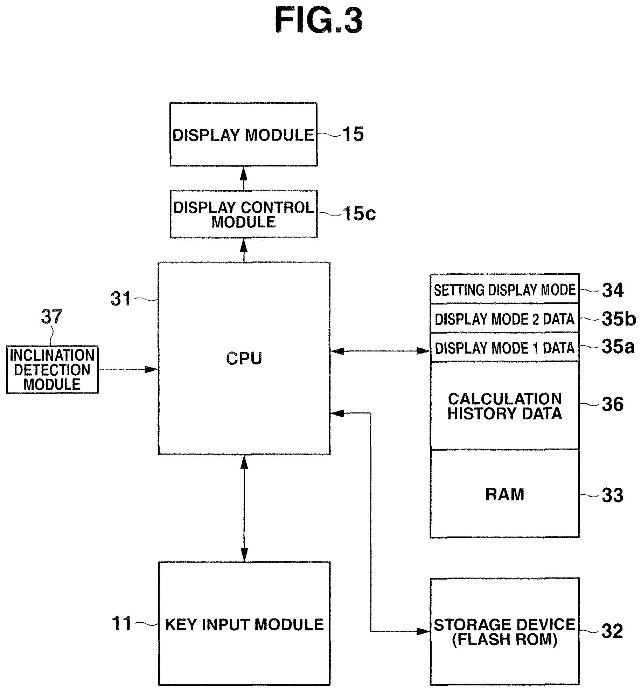

FIG. 3 is a block diagram showing a configuration of the electronic circuitry of the electronic calculator 10.

The electronic calculator 10 includes a control module (CPU) 31 functioning as a calculator.

The control module (CPU) 31 controls the operation of various parts of the circuitry using a RAM 33 as a working memory according to a system program previously stored in a storage device (flash ROM) 32 or an calculator control program externally read in the storage device 32. The system program or calculator program previously stored in the storage device 32 is activated in response to a key input signal from the key input module 11 or an inclination detection signal from an inclination detection module 37.

Connected to the control module (CPU) 31 are not only the storage device 32, RAM 33, key input module 11, and inclination detection module 37 but also the segment display module 15 via a display control module 15c.

The inclination detection module 37 includes an acceleration sensor that senses, for example, a unidirectional rotation (inclination). The detection module 37 outputs a detection signal when the calculator body is inclined forward in such a manner that the key input module 11 is situated lower than the display module 15 and further outputs a different detection signal when the calculator body is inclined to the opposite side in such a manner that the display module 15 is situated lower than the key input module 11.

In the RAM 33, storage areas, including a setting display mode memory 34, a display mode 1 data memory 35a, a display mode 2 data memory 35b, and a calculation history data memory 36, are secured.

In the setting display mode memory 34, data indicating currently set display patterns is stored.

As display patterns, six types of display patterns (see FIGS. 4A to 4F) are previously stored according to a decimal point, shapes of symbols used for digit grouping, and the difference between decimal scaling positions displayed on the display module 15. When the display pattern setting mode is activated by pressing the [DISP] key 14d for an extended time, the user can select arbitrary two from the six types of display patterns. In a normal calculator operating state, pressing the [DISP] key 14d causes the selected two types of display patterns to be switched and the selected one to be set as a display mode.

In the display mode 1 data memory 35a, data indicating one display pattern selected in the display pattern setting mode is stored.

In the display mode 2 data memory 35b, data indicating the other display pattern selected in the display pattern setting mode is stored.

In the calculation history data memory 36, history data items resulting from calculation processes according to user operations on the number and operation symbol key group 12 and calculation function setting key group 13 in the key input module 11 are stored sequentially so as to correspond to the calculation step counts.

Next, the six types of display patterns will be explained with reference to FIGS. 4A to 4F. Three types of display patterns are used as follows: a decimal point is represented by a period and three-digit grouping is used in a "standard specification," special digit grouping is used in an "Indian specification," and a decimal point is represented by a comma and three-digit grouping is used in a "European specification." In each type, a pattern that displays grouping separator symbols above a number and a pattern that displays grouping separator symbols below a number are prepared.

As shown in FIG. 4A, in a first display pattern (standard specification: UP), three-digit grouping (positional representation) is performed by prime display members 19d, 19g, 19j so as to correspond to general digit grouping as follows: the 1,000.'s (thousands), 1,000,000.'s (millions), 1,000,000,000.'s (billions), and so on. A decimal point is represented by a period display member 17a.

As shown in FIG. 4B, in a second display pattern (standard specification: down), three-digit grouping (positional representation) is performed by comma display members 18d, 18g, 18j so as to correspond to the general digit grouping. A decimal point is represented by a period display member 17a.

As shown in FIG. 4C, in a third display pattern (Indian specification: UP), three-digit grouping (positional representation) and subsequent two-digit grouping (positional representation) are performed by prime display members 19d, 19f, 19h, 19j, 191 so as to correspond to digit grouping in India as follows: the 1,000. (Sahastr/Hazaar), 1,00,000.'s (Lakn), 1,00,00,000.'s (Crone), 1,00,00,00,000.'s (Arawb), 1,00,00,00,00,000.'s (Kharawb), and so on. A decimal point is represented by a period display member 17a.

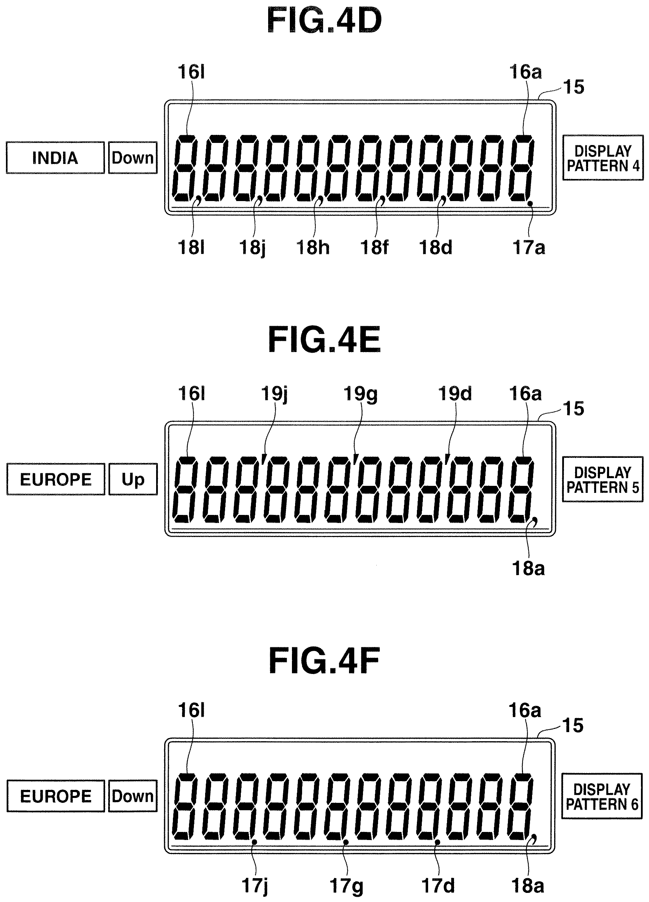

As shown in FIG. 4D, in a fourth display pattern (Indian specification: down), three-digit grouping (positional representation) and subsequent two-digit grouping (positional representation) are performed by comma display members 18d, 18f, 18h, 18j, 181 so as to correspond to the digital grouping in India. A decimal point is represented by a period display member 17a.

As shown in FIG. 4E, in a fifth display pattern (European specification: UP), three-digit grouping (positional representation) is performed by prime display members 19d, 19g, 19j so as to correspond to digit grouping in the West (non-English-speaking countries or regions) as follows: 1.000's, (thousands), 1.000.000's, (millions), 1.000.000.000's, (billions), and so on. A decimal point is represented by a comma display member 18a.

As shown in FIG. 4F, in a sixth display pattern (European specification: down), three-digit grouping (positional representation) is performed by period display members 17d, 17g, 17j so as to correspond to the digit grouping in the West. A decimal point is represented by a comma display member 18a.

In any one of the first to sixth display patterns, if the decimal place of the decimal point is shifted as a result of calculations, digit grouping separators' positions will be also shifted.

Next, the operation of the electronic calculator 10 with a check function configured as described above will be explained.

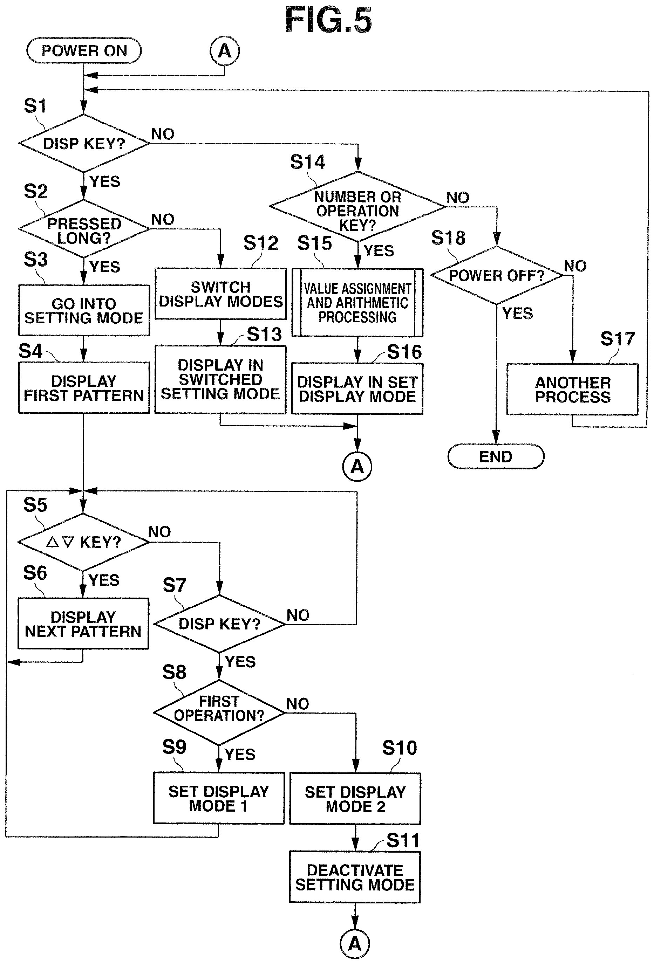

FIG. 5 is a flowchart to explain entire processing performed by the electronic calculator 10.

When a power key (not shown) is pressed, the electronic calculator 10 goes into an operating state and operates according to a key operation on the key input module 11.

When pressing of the [DISP] key 14d in the key input module 11 has been detected (Yes in step S1), it is determined whether the [DISP] key 14d has been pressed for an extended time (step S2). If the [DISP] key 14d has been pressed for a specific time or longer (Yes in step S2), the electronic calculator 10 goes into the display pattern setting mode (step S3). In this case, "SET" in the mode display members 22 on the display module 15 is displayed.

Then, the first display pattern shown in FIG. 4A is displayed on the display module 15 (step S4).

Then, when the [∇] key has been pressed, the second display pattern shown in FIG. 4B, the third display pattern shown in FIG. 4C, the fourth display pattern shown in FIG. 4D, ... are displayed in that order on the display module 15 each time the [∇] key is pressed. In addition, when the [Δ] key has been pressed, the sixth display pattern shown in FIG. 4F, the fifth display pattern shown in FIG. 4E, the fourth display pattern shown in FIG. 4D, ... are displayed in that order on the display module 15 each time the [Δ] key is pressed (step S5 [Yes] → S6).

After the display pattern has been changed by user operation and a first display pattern the user wants to use has been displayed, when the [DISP] key 14d has been pressed (Yes in step S7), it is determined whether it is a first press of the [DISP] key 14d since the start of the display pattern setting mode (step S8).

Here, if it has been determined that it is a first press of the [DISP] key 14d (Yes in step S8), the first display pattern displayed on the display module 15 is stored in the display mode 1 data memory 35a (step S9).

Then, after the display pattern has been changed similarly by user operation (step S5 [Yes] → S6) and a second display pattern the user wants to use has been displayed, when the [DISP] key 14d has been pressed (Yes in step S7), it is determined that it is a second press of the [DISP] key 14d (No in step S8).

Then, the second display pattern displayed on the display module 15 is stored in the display mode 2 data memory 35b (step S10). Thereafter, the display pattern setting mode is deactivated (step S11).

Here, suppose, for example, the third display pattern (Indian specification: UP) shown in FIG. 4C has been set in the display mode 1 data memory 35a and the second display pattern (standard specification: down) shown in FIG. 4B has been set in the display mode 2 data memory 35b according to user operation in the display pattern setting mode.

In the setting display mode memory 34, data indicating the third display pattern (Indian specification: UP) set in the display mode 1 data memory 35a is stored as the currently setting display pattern by default.

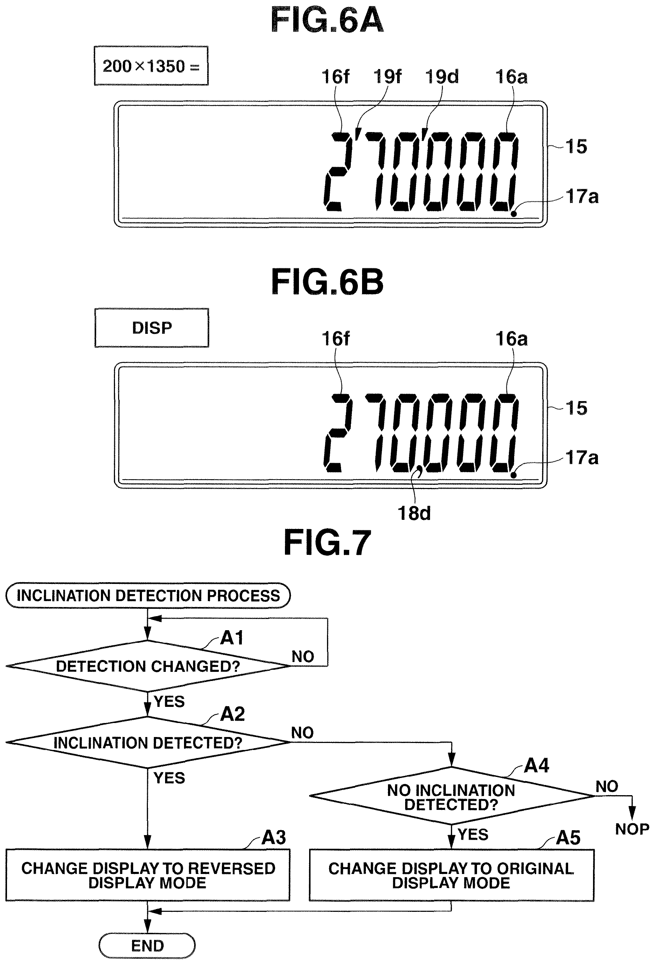

In this state, when the arithmetic operation [200 × 1350 =] has been performed as shown in FIG. 6A (Yes in step S14), value assignment and arithmetic processing are performed according to the arithmetic operation (step S15).

In this case, in the display module 15, value assignment and a value of the operation result are displayed according to the third display pattern (Indian specification: UP) stored in the display mode 1 data memory 35a set in the setting display mode memory 34 (step S16).

Specifically, the calculation result of the arithmetic operation [200 × 1350 =] is displayed as [2' 70' 000.] (2 [Lark] 70 [Sahastr/Hazaar]) as shown in FIG. 6A.

In this display state, when the user has pressed the [DISP] key 14d as shown in FIG. 6B (step S1 [Yes] → S2 [No]), the display mode 1 data 35a (third display pattern [Indian specification: UP]) set in the setting display mode memory 34 is switched to to the display mode 2 data 35b (second display pattern [standard specification: down]) (step S12).

Then, the display of the operation result is switched to [270, 000.] (270 [thousand]) as shown in FIG. 6B (step S13).

Thereafter, in the process of performing value assignment and arithmetic processing according to user operation (steps S14 to S16), each time the [DISP] key 14d is pressed, a display pattern on the display module 15 switches between the third display pattern (Indian specification: UP) set in the display mode 1 data memory 35a and the second display pattern (standard specification: down) set in the display mode 2 data memory 35b (step S1 [Yes] → S2 [No] → S12, S13).

Therefore, for example, while a calculation process is being performed according to the Indian specification, a representation in the standard specification can also be checked easily, preventing digit positions from being read erroneously.

Accordingly, with the display pattern switching function of the electronic calculator 10 configured as described above, not only the conventional Western three-digit grouping display pattern but also a plurality of types of digit-grouping display patterns differing from country to country or from region to region are included and the user can select/set two from the display patterns according to the user's preference. Since the two types of digit grouping display patterns selected/set by the user are made switchable freely according to the user's preference or a scene where the user uses an electronic calculator, it is possible to prevent digit positions from being read erroneously and improve the visibility of digits (units) and recognition time.

In addition, the electronic calculator 10 explained in the embodiment has not only the display pattern switching function but also the function of switching display patterns according to the inclination of the body explained below.

FIG. 7 is a flowchart to explain an inclination detection process performed by the electronic calculator 10.

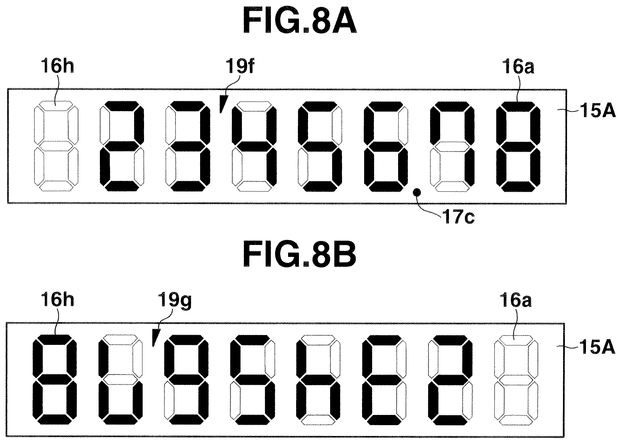

FIG. 8A shows a concrete example of a number display operation in a body upright state associated with the inclination detection process performed by the electronic calculator 10.

FIG. 8B shows a concrete example of a number display operation in a body upside-down state associated with the inclination detection process performed by the electronic calculator 10.

Here, when the inclination detection module 37 of the electronic calculator 10 goes into a "no indication detection" state when the body is placed horizontally or inclined in such a manner that the end where the display module lies is located above the rest. In contrast, the inclination detection module 37 goes into an "inclination detection" state when the body where the display module lies is located lower than the rest and outputs the detection signal.

For example, suppose the value assignment and arithmetic processing of the electronic calculator 10 (step S14 [Yes] → S15) shown in FIG. 5 causes the value [23456.78] of the operation result to be displayed as [23'456.78] on the display module 15A as shown in FIG. 8A (step S16) according to the first display pattern (standard specification: UP) set by the user.

Here, to show the value [23'456.78] displayed on the display module 15A to the other party facing the user, the user inclines the electronic calculator body backward (so as to make the end where the display module is located lie lower than the rest), causing the inclination detection module 37 to output a detection signal of "inclination detection" (step A1 [Yes] → A2 [Yes]).

Then, the display mode of the display module 15A is changed to a reversed display mode, with the result that the number [23456.78] displayed until then is changed to a 180-degree reversed state, which is displayed on the display module 15A as shown in FIG. 8B (step A3).

In the reversed display mode, the prime display member 19g is displayed as a decimal point and the digit grouping (positional representation) according to the first display pattern (standard specification: UP) set by the user is not displayed.

After this, when the user has inclined the calculator body forward to operate the electronic calculator 10 again, the inclination detection module 37 outputs a detection signal of "no inclination detection" (step A1 [Yes] → A4 [Yes]).

Then, the display mode of the display module 15A is changed to the preceding display mode, with the result that [23'456.78] is displayed on the display module 15A as shown in FIG. 8A (step A5).

Therefore, with the function of switching display patterns according to the direction of the body of the electronic calculator 10 configured as described above, when the calculator body is changed from an upright state where the body faces the user to an upside-down state where the body is inclined to the opposite side, a number displayed on the display module 15A is changed to a 180-degree reversed state. When the body is redirected so as to face the user, the number returns to the original representation.

Therefore, the user can easily show the contents of the result of calculations done according to user operation to the other party facing the user for confirmation and then easily return the body to the original position to continue the calculations.

The embodiment has been configured to switch between one display pattern set in the display mode 1 data memory 35a and the other display pattern set in the display mode 2 data memory 35b according to the pressing of the [DISP] key. In contrast, the two display patterns may be switched by the operation of a slide switch or by the movement of the calculator body detected by an acceleration sensor, not by a key operation.

### EXPLANATION OF REFERENCE SYMBOLS

- 10: ... Electronic calculator with a check function
- 11: ... Key input module
- 12: ... Number and operation symbol key group
- 13: ... Calculation function setting key group
- 14: ... Check function key group
- 14d: ... [DISP] key
- 15, 15A ...: Segment display module
- 15c ...: Display control module
- 16a to 161 ...: Number display members
- 17a to 171 ...: Period display members
- 18a to 181 ...: Comma display members
- 19d to 191 ...: Prime display members
- 20 ...: Prefix display members
- 21 ...: Operator display members
- 22 ...: Mode display members
- 23 ...: Step count display member
- 31 ...: Control module (CPU)
- 32 ...: Storage device
- 33 ...: RAM
- 34 ...: Setting display mode memory
- 35a ...: Display mode 1 data memory
- 35b ...: Display mode 2 data memory
- 36 ...: Calculation history data memory
- 37 ...: Inclination detection module

## Claims

1. An electronic calculator (10) comprising:
a display module (15) in which digit grouping display members and decimal point display members are arranged in the upper part and lower part of a plural-digit number display member;
a display pattern storage (32) for storing display patterns according to a decimal point, shapes of symbols used for digit grouping, and the difference between decimal scaling positions displayed together with a number on the display module (15), wherein the stored display patterns include:
a first display pattern, wherein three-digit grouping is performed by prime display members (19d, 19g, 19j) and a decimal point is represented by a period display member (17a),
a second display pattern, wherein three-digit grouping is performed by comma display members (18d, 18g, 18j) and the decimal point is represented by a period display member (17a),
a third display pattern, wherein three-digit grouping and subsequent two-digit grouping are performed by prime display members (19d, 19f, 19h, 19j, 19i) and the decimal point is represented by a period display member (17a),
a fourth display pattern, wherein three-digit grouping and subsequent two-digit grouping are performed by comma display members (18d,18f,18h,18j,18i) and the decimal point is represented by a period display member (17a),
a fifth display pattern, wherein three-digit grouping is performed by prime display members (19d,19g,19j) and the decimal point is represented by a comma display member (18a), and
a sixth display pattern, wherein three-digit grouping is performed by period display members (17d,17g,17j) and a decimal point is represented by a comma display member (18a);
a display pattern selection unit for selecting two types of display patterns according to user operation from the display patterns stored in the display pattern storage (32);
a selected display pattern storage (34) for storing the two types of display patterns selected by the display pattern selection unit; and
a display pattern switching unit for switching the two types of display patterns stored by the selected display pattern storage (34) according to user operation.

2. The electronic calculator according to claim 1, wherein
in the third display pattern, the three-digit grouping and subsequent two-digit grouping are performed so as to correspond to digit grouping in India; and
in the fourth display pattern, the three-digit grouping and subsequent two-digit grouping are performed so as to correspond to digit grouping in India.

3. The electronic calculator (10) according to claim 1, **characterized in that**
the digit grouping display members in the upper part of the display module (15) are configured to be prime display members (19) and the display members in the lower part are so configured that comma display members (18) and period display members (17) are arranged in parallel.

4. The electronic calculator (10) according to claim 3, **characterized by** comprising inclination detection unit (37) for detecting an inclination of a calculator (10) body, and reversed display unit for reversing a number displayed on the display module (15) according to the detection of the inclination of the calculator (10) body by the inclination detection unit (37).

5. The electronic calculator (10) according to claim 4, **characterized in that**
a display pattern displayed together with a number on the display module (15) is set in advance as a display pattern with no digit grouping symbol when the number currently displayed on the display module (15) has been reversed by the reversed display unit.

## Patentansprüche

1. Elektronischer Rechner (10), umfassend:
ein Anzeigemodul (15), in dem Zifferngruppierung-Anzeigeelemente und Dezimalpunkt-Anzeigeelemente in dem oberen Teil und unteren Teil einer Mehrziffernzahl-Anzeigeglied angeordnet sind;
ein Anzeigemusterspeicher (32) zum Speichern von Anzeigemustern gemäß einem Dezimalpunkt, Formen von Symbolen, die zur Zifferngruppierung verwendet werden, und dem Unterschied zwischen Dezimal-Skalierungspositionen, die zusammen mit einer Zahl auf dem Anzeigemodul (15) angezeigt werden, wobei die gespeicherten Anzeigemuster enthalten:
ein erstes Anzeigemuster, worin Dreiziffer-Gruppierung durch Prime-Anzeigeelemente (19d, 19g, 19j) durchgeführt wird und ein Dezimalpunkt durch ein Punkt-Anzeigeelement (17a) dargestellt wird,
ein zweites Anzeigemuster, worin Dreiziffer-Gruppierung durch Komma-Anzeigeelemente (18d, 18g, 18j) durchgeführt wird und der Dezimalpunkt durch ein Punkt-Anzeigeelement (17a) dargestellt wird,
ein drittes Anzeigemuster, worin Dreiziffer-Gruppierung und nachfolgende Zweiziffer-Gruppierung durch Prime-Anzeigeelemente (19d, 19f, 19h, 19j, 19i) durchgeführt werden und der Dezimalpunkt durch ein Punkt-Anzeigeelement (17a) dargestellt wird,
ein viertes Anzeigemuster, worin Dreiziffer-Gruppierung und nachfolgende Zweiziffer-Gruppierung durch Komma-Anzeigeelemente (18d, 18f, 18h, 18j, 18i) durchgeführt werden und der Dezimalpunkt durch ein Punkt-Anzeigeelement (17a) dargestellt wird,
ein fünftes Anzeigemuster, worin Dreiziffer-Gruppierung durch Prime-Anzeigeelemente (19d, 19g, 19j) durchgeführt wird und der Dezimalpunkt durch ein Komma-Anzeigeelement (18a) dargestellt wird, und
ein sechstes Anzeigemuster, worin Dreiziffer-Gruppierung durch Punkt-Anzeigeelemente (17d, 17g, 17j) durchgeführt wird und ein Dezimalpunkt durch ein Komma-Anzeigeelement (18a) dargestellt wird;
eine Anzeigemuster-Auswahleinheit zum Auswählen zweier Arten von Anzeigemustern, entsprechend einer Nutzerhandlung, aus den Anzeigemustern, die in dem Anzeigemusterspeicher (32) gespeichert sind;
einen Gewählte-Anzeigemuster-Speicher (34) zum Speichern der zwei Arten von Anzeigemustern, die von der Anzeigemuster-Auswahleinheit ausgewählt werden; und
eine Anzeigemuster-Umschalteinheit zum Umschalten der zwei Arten von Anzeigemustern, die von dem Gewählte-Anzeigemuster-Speicher (34) gespeichert sind, entsprechen einer Nutzerhandlung.

2. Elektronischer Rechner nach Anspruch 1, wobei
in dem dritten Anzeigemuster die Dreiziffer-Gruppierung und nachfolgende Zweiziffer-Gruppierung durchgeführt werden, so dass sie der Zifferngruppierung in Indien entspricht; und
in dem vierten Anzeigemuster die Dreiziffer-Gruppierung und nachfolgende Zweiziffer-Gruppierung durchgeführt werden, so dass sie der Zifferngruppierung in Indien entspricht.

3. Elektronischer Rechner (10) nach Anspruch 1, **dadurch gekennzeichnet, dass**
die Zifferngruppierung-Anzeigeelemente in dem oberen Teil des Anzeigemoduls (15) eingerichtet sind, Prime-Anzeigeelemente (19) zu sein, und die Anzeigeelemente in dem unteren Teil so eingerichtet sind, dass Komma-Anzeigeelemente (18) und Punkt-Anzeigeelemente (17) parallel angeordnet sind.

4. Elektronischer Rechner (10) nach Anspruch 3, **dadurch gekennzeichnet, dass** er umfasst
eine Neigungserkennungseinheit (37) zum Erkennen einer Neigung eines Rechner (10)-Körpers, und eine umgedrehte Anzeigeeinheit zum Umdrehen einer Zahl, die auf dem Anzeigemodul (15) angezeigt wird, entsprechend der Erkennung der Neigung des Rechner (10)-Körpers durch die Neigungserkennungseinheit (37).

5. Elektronischer Rechner (10) nach Anspruch 4, **dadurch gekennzeichnet, dass**
ein Anzeigemuster, das zusammen mit einer Zahl auf dem Anzeigemodul (15) angezeigt wird, im Voraus eingestellt wird als ein Anzeigemuster mit keinem Ziffergruppierungssymbol, wenn die Zahl, die momentan auf dem Anzeigemodul (15) angezeigt wird, von der umgedrehten Anzeigeeinheit umgedreht wurde.

## Revendications

1. Calculatrice électronique (10) comprenant :
un module d'affichage (15) dans lequel des éléments d'affichage de groupement de chiffres et des éléments d'affichage de décimales sont disposés dans les partie supérieure et partie inférieure d'un élément d'affichage de nombres à plusieurs chiffres ;
un stockage de schémas d'affichage (32) pour stocker des schémas d'affichage selon un point décimal, des formes de symboles utilisées pour grouper de chiffres, et la différence entre des positions d'échelle décimale affichées ensemble avec un nombre sur le module d'affichage (15), dans laquelle les schémas d'affichage stockés incluent :
un premier schéma d'affichage, dans laquelle un groupement de trois chiffres est effectué par des éléments d'affichage principaux (19d, 19g, 19j) et un point décimal est représenté par un élément d'affichage de point (17a),
un deuxième schéma d'affichage, dans laquelle un groupement de trois chiffres est effectué par des éléments d'affichage de virgule (18d, 18g, 18j) et le point décimal est représenté par un élément d'affichage de point (17a),
un troisième schéma d'affichage, dans laquelle un groupement de trois chiffres et un groupement de deux chiffres consécutif sont effectués par des éléments d'affichage principaux (19d, 19f, 19h, 19j, 19i) et le point décimal est représenté par un élément d'affichage de point (17a),
un quatrième schéma d'affichage, dans laquelle un groupement de trois chiffres et un groupement de deux chiffres consécutif sont effectués par des éléments d'affichage de virgule (18d, 18f, 18h, 18j, 18i) et le point décimal est représenté par un élément d'affichage de point (17a),
un cinquième schéma d'affichage, dans laquelle un groupement de trois chiffres est effectué par des éléments d'affichage principaux (19d, 19g, 19j) et un point décimal est représenté par un élément d'affichage de virgule (18a), et
un sixième schéma d'affichage, dans laquelle un groupement de trois chiffres est effectué par des éléments d'affichage de point (17d, 17g, 17j) et un point décimal est représenté par un élément d'affichage de virgule (18a) ;
une unité de sélection de schémas d'affichage pour sélectionner deux types de schémas d'affichage selon une opération d'utilisateur depuis les schémas d'affichage stockés dans le stockage de schémas d'affichage (32) ;
un stockage de schémas d'affichage sélectionnés (34) pour stocker les deux types de schémas d'affichage sélectionnés par l'unité de sélection de schémas d'affichage ; et
une unité de commutation de schémas d'affichage pour commuter les deux types de schémas d'affichage stockés par le stockage de schémas d'affichage sélectionnés (34) selon une opération d'utilisateur.

2. La calculatrice électronique selon la revendication 1, dans laquelle
dans le troisième schéma d'affichage, les groupements de trois chiffres et groupement de deux chiffres consécutif sont effectués de sorte à correspondre à un groupement de chiffres en Inde ; et
dans le quatrième schéma d'affichage, les groupements de trois chiffres et groupement de deux chiffres consécutif sont effectués de sorte à correspondre à un groupement de chiffres en Inde.

3. La calculatrice électronique (10) selon la revendication 1, **caractérisée en ce que**
les éléments d'affichage de groupement de chiffres dans la partie supérieure du module d'affichage (15) sont configurés pour constituer des éléments d'affichage principaux (19) et les éléments d'affichage dans la partie inférieure sont configurés de sorte que des éléments d'affichage de virgule (18) et des éléments d'affichage de point (17) sont disposés en parallèle.

4. La calculatrice électronique (10) selon la revendication 3, **caractérisée en ce qu'**elle comprend
une unité de détection d'inclination (37) pour détecter une inclinaison d'un corps d'une calculatrice (10), et une unité d'affichage inversé pour inverser un nombre affiché sur le module d'affichage (15) selon la détection de l'inclinaison du corps de calculatrice (10) par l'unité de détection d'inclinaison (37).

5. La calculatrice électronique (10) selon la revendication 4, **caractérisée en ce que**
un schéma d'affichage affiché ensemble avec un nombre sur le module d'affichage (15) est défini à l'avance en tant que schéma d'affichage dépourvu de symbole de groupement de chiffres lorsque le nombre couramment affiché sur le module d'affichage (15) a été inversé par l'unité d'affichage inversé.
